(19) **Europäisches Patentamt**

**European Patent Office**

**Office européen des brevets**

(11) **EP 1 228 168 B1**

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(51) Int Cl.:
*C10G 45/64* (2006.01)    *C10G 35/095* (2006.01)
*C10G 65/08* (2006.01)    *C10G 59/02* (2006.01)
*B01J 29/40* (2006.01)

(21) Anmeldenummer: **00964271.1**

(22) Anmeldetag: **04.10.2000**

(86) Internationale Anmeldenummer:
**PCT/EP2000/009698**

(87) Internationale Veröffentlichungsnummer:
**WO 2001/027223 (19.04.2001 Gazette 2001/16)**

(54) **VERFAHREN ZUR HERSTELLUNG VON N-ALKANEN AUS MINERALÖLFRAKTIONEN UND KATALYSATOR ZUR DURCHFÜHRUNG DES VERFAHRENS**

METHOD FOR PRODUCTION OF N-ALKANES FROM MINERAL OIL FRACTIONS AND CATALYST FOR CARRYING OUT SAID METHOD

PROCEDE POUR PRODUIRE DES N-ALCANES A PARTIR DE FRACTIONS D'HUILES MINERALES ET CATALYSEUR POUR METTRE EN OEUVRE LEDIT PROCEDE

(84) Benannte Vertragsstaaten:
**AT BE CH CY DE DK ES FI FR GB GR IE IT LI LU MC NL PT SE**
Benannte Erstreckungsstaaten:
**RO**

(30) Priorität: **13.10.1999 DE 19949211**

(43) Veröffentlichungstag der Anmeldung:
**07.08.2002 Patentblatt 2002/32**

(73) Patentinhaber: **Deutsche BP AG**
**22761 Hamburg (DE)**

(72) Erfinder:
• **WEITKAMP, Jens**
**72160 Horb am Neckar (DE)**
• **BISCHOF, Hilmar**
**45768 Marl (DE)**
• **DÖHLER, Werner**
**45894 Gelsenkirchen (DE)**
• **LAEGE, Jürgen**
**45721 Haltern (DE)**
• **FUDER, Franz**
**46236 Bottrop (DE)**
• **RAICHLE, Andreas**
**73733 Esslingen (DE)**
• **TRAA, Yvonne**
**70174 Stuttgart (DE)**

(74) Vertreter: **Sternagel, Fleischer, Godemeyer & Partner**
**Patentanwälte,**
**An den Gärten 7**
**51491 Overath (DE)**

(56) Entgegenhaltungen:
EP-A- 0 512 652        EP-A- 0 885 655
WO-A-95/28459        GB-A- 1 259 384
GB-A- 1 400 454        US-A- 3 702 886
US-A- 4 861 932        US-A- 5 865 986

**Beschreibung**

Gegenstand der Erfindung ist ein Verfahren zur Herstellung von n-Alkanen aus Mineralölfraktionen und Fraktionen aus thermischen oder katalytischen Konversionsanlagen enthaltend cyclische Alkane, Alkene, cyclische Alkene und/oder Aromaten sowie ein neuer Katalysator zur Durchführung des Verfahrens.

In den vergangenen Jahren wurden die Spezifikationen für Mineralöle und Kraftstoffe dahingehend geändert, daß beispielsweise bleihaltige Zusätze als Antiklopfmittel nicht mehr zulässig sind. Dies macht es für die Hersteller von Ottokraftstoffen notwendig, modifizierte Verfahren zur Verfügung zu stellen, die zu höheren Oktanzahlen und einer ausreichenden Klopffestigkeit des Kraftstoffes führen. Aufgrund der Veränderungen der Verfahren werden heute Kraftstoffe mit einem etwas höheren Gehalt an Aromaten hergestellt, so daß die derzeitigen Kraftstoffe je nach Sorte (z.B. Normal/Super) im allgemeinen Aromatengehalte bis etwa 60 Vol.-% oder mehr besitzen. Dabei beträgt in Deutschland der derzeit zulässige Benzolgehalt maximal 5 Vol.-%.

Es ist beabsichtigt, in Zukunft Grenzwerte für die Aromatenkonzentrationen in Kraftstoffen festzulegen. Hierdurch sollen die Emissionen von Aromaten und radikalbildenden Verbindungen verringert werden. Kraftstoffe, die diesen Spezifikationen genügen, müssen einen abgesenkten Dampfdruck, einen geringeren Siedeendpunkt und verringerte Gehalte von Olefinen, Benzol und anderen Aromaten aufweisen. Derartige Kraftstoffe sollen einen Aromatengehalt von 35 Vol.-% oder niedriger besitzen.

Diese Spezifikationen können nur erreicht werden, wenn große Anteile der Aromaten gegen gleichwertige aliphatische Verbindungen oder Booster z.B. Methyl-tert.-butylether (MTBE) ausgetauscht werden. Nach dem bisherigen Stand der Technik ist es aufwendig und teuer, aliphatenreiche Kraftstoffe zu produzieren. Der Gehalt an Aromaten im Kraftstoff war bisher das Mittel der Wahl, um die notwendigen Oktanzahlen ohne Bleizusatz erreichen zu können. Zukünftig wird daher zur Kraftstoffherstellung ein erheblicher Boosterbedarf bestehen. Der permanente Zukauf von Boostern bedeutet aber auch einen nennenswerten wirtschaftlichen Nachteil für den Kraftstoffhersteller.

Aufgrund der Verringerung des Aromatengehaltes in Kraftstoffen müssen aromatenreiche Fraktionen einer neuen Verwendung zugeführt werden. Der Hauptprozeß in Europa zur Erzeugung von Ethylen und Propylen ist die thermische Spaltung von Naphtha in Olefinanlagen. Bei diesem Prozeß fällt unter anderem ein olefin- und aromatenreiches Pyrolyse(schwer)benzin an. Dieses wurde in der Vergangenheit als hochoktanige Komponente zum Ottokraftstoff beigemischt. Mit der Einführung der neuen Kraftstoffspezifikationen ist der Aromatengehalt im Ottokraftstoff zu begrenzen, so daß nach Wegen gesucht wurde, das Pyrolyse(schwer)benzin einer anderen Verwendung mit hoher Wertschöpfung zuzuführen.

Aus dem Stand der Technik sind verschiedene Verfahren zur Herstellung von nicht-cyclischen bzw. iso-Alkanen aus Mineralölfraktionen, die cyclische Alkane und Aromaten enthalten, bekannt.

So beschreibt die US 5,831,139 ein Verfahren zur Herstellung von aliphatischen Kraftstoffen mit geringeren Konzentrationen an Aromaten und einem geringeren Siedepunkt. Bei dem Verfahren wird der hochsiedende Naphtha-Anteil in Isobutan und andere Isoparaffinderivate überführt und der Gehalt an cyclischen Verbindungen erheblich verringert. Zur Herstellung dieser Kraftstoffkomponente wird die Naphtha-Fraktion zunächst einer Hydrierung über einem Hydrierungskatalysator unterzogen, um so die enthaltenen aromatischen Verbindungen in cyclische Alkanverbindungen zu überführen. Für diese Hydrierung wird ein üblicher Hydrierungskatalysator verwendet, der vorzugsweise Metallanteile der Platingruppe wie beispielsweise Platin, Palladium, Ruthenium, Rhodium, Osmium und Iridium enthält. Diese Metalle befinden sich auf einem anorganischen Oxidträger, der vorzugsweise aus Aluminiumoxid besteht.

Nach der Hydrierung wird in einem zweiten Reaktionsschritt die selektive Isoparaffinsynthese durchgeführt. Hierzu wird ein Isoparaffinsynthesekatalysator verwendet, der beispielsweise aus einem Zeolith des Typs MOR, FAU, LTL, MAZ, MEL, MFI, MTW und Beta bestehen kann. Hierbei sind die Zeolithe MOR, FAU, MAZ und Beta bevorzugt. Derartige Zeolithtypen sind aus dem Stand der Technik bekannt und werden in den folgenden Patentschriften beschrieben (US 4,083,886 und US 4,826,801 [MOR], US 3,130,007 und US 4,401,556 [FAU], US 3,216,789 und US 4,503,023 [LTL], US 4,241,036 und US 5,192,727 [MAZ], US 3,709,979 [MEL], US 3,702,886 [MFI] und US 3,832,449 [MTW], US 3,308,069/Re 28 341 und US 5,095,169 [Beta]).

Die leichtflüchtigen Produkte der Isoparaffinsynthese werden abgetrennt, und der schwerflüchtige Anteil wird einer Ringöffnungsstufe zugeführt. Für die Ringöffnung wird ein nichtsaurer Katalysator verwendet, der aus Pt, Pd, Ru, Rh, Os, Ir oder Gemischen derselben auf einem anorganischen Oxid und/oder einem Zeolith besteht, vorzugsweise jedoch 0,9 Gew.-% Pt und 0,8 Gew.-% K auf theta-Aluminiumoxid. Als Zeolithe werden nur nichtsaure weitporige, d. h. nicht formselektive Zeolithe, vorzugsweise Zeolith L, verwendet. Die Produkte der Ringöffnung werden wieder der selektiven Isoparaffinsynthese zugeführt.

Mit dem Verfahren werden aliphatische Benzinkomponenten durch Ringöffnung und Isoparaffinsynthese hergestellt, wobei möglichst hochverzweigte iso-Alkane erzeugt werden sollen, ohne Verminderung der Kohlenstoffanzahl gegenüber dem Einsatzkohlenwasserstoff. Die Oktanzahl des Produktes soll möglichst hoch sein. Als Ausgangskohlenwasserstoff wird bevorzugt Methylcyclopentan eingesetzt, das leichter Ringöffnungsreaktionen unterzogen werden kann als Alkane mit Sechsringstruktur.

Die WO97/09288 A1 beschreibt ebenfalls ein Ringöffnungsverfahren für Naphthene, wobei eine Fraktion mit einem metallhaltigen Katalysator in Kontakt gebracht wird, der Iridium oder Ruthenium oder Mischungen derselben enthält. Fraktion enthält 20 Gew.-% n-Butylcyclohexan in Heptan und wird umgesetzt zu einem Substanzgemisch aus wenigstens 10 % $C_{10}$-Paraffinen mit einer Selektivität von wenigstens 0,2, wobei die Selektivität definiert ist als %-Anteil $C_{10}$-Paraffin-Ausbeute zu %-Anteil an $C_{10}$-Ringöffnung. Das Verfahren wird bei Temperaturen von 150 bis 400 °C in Anwesenheit von Wasserstoff und einem Gesamtdruck von 0 bis 3000 psig durchgeführt.

Der verwendete Katalysator enthält als Metallanteile bevorzugt Iridium, Ruthenium und Rhodium. Es werden Zeolithe als Katalysatoren eingesetzt, die eine Faujasit-Struktur mit nur wenigen sauren Zentren besitzen und nicht formselektiv sind. Wenn als Zeolith ECR-32 eingesetzt wird, liegt der Metallzusatz bevorzugt bei 0,9 Gew.-% Iridium.

Mit dem Verfahren sollen hochwertige Diesel- oder Flugturbinenkraftstoffe durch Ringverengung vom Sechsring zum Fünfring mit anschließender Ringöffnung am Metall hergestellt werden. Auch bei diesem Verfahren findet keine Verminderung der Kohlenstoffanzahl gegenüber dem Einsatzkohlenwasserstoff statt. Die Herstellung von höheren Alkanen ist erwünscht. Das Produkt hat somit einen höheren Siedebereich. Das Produkt soll auch eine möglichst hohe Cetanzahl besitzen.

Als Ausgangskohlenwasserstoff wird vorzugsweise Butylcyclohexan eingesetzt.

Die US 5,334,792 beschreibt wie die US 5,831,139 ein Ringöffnungsverfahren für Aromaten und cycloaliphatische Verbindungen sowie ein Isomerisierungsverfahren für Aliphaten. Die eingesetzte Fraktion für diesen Prozeß umfaßt $C_6$-Cycloparaffine oder Benzol. Das Verfahren wird in wenigstens zwei Reaktoren, die hintereinander geschaltet sind, durchgeführt. Im ersten Reaktor ist ein Zeolithkatalysator enthalten, der unter Reaktionsbedingungen betrieben wird, die zu einer Ringöffnung führen. Der nachfolgende Reaktor wird unter Reaktionsbedingungen betrieben, die eine Isomerisierung der aliphatischen Verbindungen herbeiführen. Als Katalysator für die erste Reaktionszone (Ringöffnungsreaktion) wird ein bifunktioneller Zeolithkatalysator mit Metallanteilen von 0,01 bis 20 Gew.-% verwendet. Als Zeolithe werden solche mit einem Zwangsindex von 12 oder weniger eingesetzt. Dieser Katalysator wird für die Ringöffnung verwendet, bevorzugt ist ein Zeolith des Typs Beta oder Y mit entsprechenden Metallanteilen an Platin. Als Katalysator für den zweiten Reaktionsschritt, der Isomerisierung, wird ein platinhaltiges Aluminiumoxid eingesetzt.

Ziel des Verfahrens ist die Verringerung aromatischer Verbindungen in Kraftstoffen und insbesondere die Herstellung eines hochoktanigen paraffinischen Benzins aus den Aromaten durch Ringöffnung an bifunktionellen Zeolithkatalysatoren mit anschließender Isomerisierung. Die Herstellung von Isoalkanen ist bevorzugt. Eine Verringerung der Kohlenstoffanzahl findet ebenfalls nicht statt.

Die Verfahren des Standes der Technik wandeln die aromatischen oder cycloaliphatischen Verbindungen im allgemeinen entweder in Isoalkane um oder es werden höhere $C_5$-$C_8$-Alkane hergestellt, wobei sich bei beiden Umwandlungen die Anzahl der Kohlenstoffatome gegenüber den Ausgangsverbindungen gar nicht ändert oder nur geringfügig verringert wird.

Die technische Aufgabe des erfindungsgemäßen Verfahrens ist es daher, ein Verfahren zur Verarbeitung aromatenreicher Mineralölfraktionen zur Verfügung zu stellen, bei dem die nach der Hydrierung der Aromaten erhaltenen cyclischen Alkane zu n-Alkanen möglichst geringerer Kettenlänge als der der Einsatzkohlenstoffe umgewandelt werden.

Diese technische Aufgabe wird gelöst mittels eines Verfahrens gemäß Anspruch 1. Dieses dient der Herstellung von n-Alkanen aus Mineralölfraktionen und Fraktionen aus thermischen oder katalytischen Konversionsanlagen enthaltend cyclische Alkane, Alkene, cyclische Alkene und/oder Aromaten, und ist durch die folgenden Schritte, gekennzeichnet.

Die Mineralölfraktion wird mit einem Zeolithkatalysator mit einem Geräumigkeitsindex SI ≤ 20 und einem modifizierten Zwangsindex CI*> 1 umgesetzt. Der Wasserstoffdruck beträgt bei der Reaktion 5 bis 200 bar, vorzugsweise 40 bis 80 bar und besonders bevorzugt 50 bis 70 bar und ganz besonders bevorzugt 60 bar. Die Reaktionstemperatur beträgt 150 bis 550 °C, vorzugsweise 300 bis 500 °C und ganz besonders bevorzugt 400 °C. Die Belastung des Katalysators (WHSV) beträgt 0,1 bis 20 h$^{-1}$, vorzugsweise 0,5 bis 3,0 h$^{-1}$ und besonders bevorzugt 1,3 bis 1,9 h$^{-1}$ und ganz besonders bevorzugt 1,66 h$^{-1}$. Durch das Verfahren werden die cyclischen Kohlenwasserstoffe zu n-Alkanen insbesondere Ethan, Propan und n-Butan umgewandelt.

Als cyclische Alkane oder Aromaten werden vorzugsweise Verbindungen ausgewählt aus der Gruppe substituiertes oder nicht substituiertes Benzol, Toluol, Xylol, Methylcyclohexan eingesetzt.

In einer bevorzugten Ausführungsform beträgt der Anteil der n-Alkane ohne Methan und ohne $H_2$ am Reaktionsprodukt 50 bis 95 Gew.-%, vorzugsweise 66 bis 90 Gew.-% und der Anteil an Cycloalkanen im Reaktionsprodukt ist ≤ 0,2 Gew.-%, wobei sich der Gehalt an Aromaten im Vergleich zum Ausgangsprodukt nicht vergrößert.

Das erfindungsgemäße Verfahren ist dadurch gekennzeichnet, daß es Aromaten vorwiegend in n-Alkane geringerer Kohlenstoffanzahl als die der Ausgangsstoffe umwandelt. So entstehen überwiegend n-Alkane, wie, Ethan, Propan und n-Butan. Diese Verbindungen können in Steamcrackern eingesetzt werden und mit hohen Ausbeuten zu den Zielprodukten Propylen und Ethylen überführt werden. Ein weiterer Vorteil ist es, daß durch die hohe Propanmenge die Propylenausbeute in den Steamcrackern erhöht wird. Das Verfahren eröffnet somit eine Möglichkeit, die Ausbeutestrukturen in Steamcrackern in einem größeren Bereich zu beeinflussen als dies nach dem Stand der Technik möglich ist.

Üblicherweise werden die Mineralölfraktionen oder Fraktionen aus Konversionsanlagen in einem vorgeschalteten Reaktionsschritt hydriert. In einem weiteren Reaktionsschritt werden diese Mineralölfraktionen dann dem erfindungsgemäßen Verfahren unterworfen und die entsprechenden n-Alkanverbindungen hergestellt.

Es ist grundsätzlich auch möglich, den Hydrierschritt und das erfindungsgemäße Verfahren in einem Reaktor durchzuführen. Hierbei ist jedoch zu beachten, daß die Hydrierung im allgemeinen bei niedrigeren Temperaturen durchgeführt wird als die Herstellung der n-Alkane nach dem erfindungsgemäßen Verfahren. Eine Durchführung in einem Reaktor ist daher möglich, wenn die Temperatur im Eingangsbereich des Reaktors bei etwa 250 °C und im Ausgangsbereich bei etwa 400 °C liegt. Die Katalysatorschüttung im Reaktor muß dann kontinuierlich von einem bekannten Hydrierkatalysator des Standes der Technik zu dem Katalysator für das erfindungsgemäße Verfahren hin geändert werden. Eine solche Temperaturführung und Anordnung des Katalysators ermöglicht die Nutzung der bei der Hydrierung anfallenden Hydrierwärme, um das Gas auf die für die n-Paraffinbildung benötigte Temperatur aufzuheizen. Im anderen Fall müßte die anfallende Hydrierwärme abgeführt werden, um eine Überhitzung des Systems und damit eine Schädigung des Katalysators zu vermeiden.

Um im Falle der Umsetzung der aromatenhaltigen Einsatzströme Nebenproduktbildung möglichst zu vermeiden, werden diese in relativ kaltem Zustand der Hydrierung zugeführt und erst unmittelbar vor der Reaktionszone auf Hydriertemperatur gebracht. Dies geschieht bevorzugt durch das Zumischen von heißem bereits hydriertem Produkt im Heißumlaufverfahren. Diese Vorgehensweise erlaubt eine sehr präzise Temperatursteuerung, ergibt kurze Verweilzeiten bei der für die Hydrierung benötigten Temperatur und führt zudem zu einem Verdünnungseffekt der Komponenten im Einsatzstrom, die zur Nebenproduktbildung neigen. Ein Wärmetauscher oder ähnliche Vorrichtungen werden hierzu nicht benötigt.

Die aromatenreichen Mineralölfraktionen, die für die Hydrierung eingesetzt werden, enthalten etwa 80 bis 95 Gew.-% aromatische Verbindungen und 1 bis 20 Gew.-% olefinische Verbindungen. Diese werden bei der Hydrierung annähemd vollständig in cyclische aliphatische Verbindungen umgesetzt.

Mit dem erfindungsgemäßen Verfahren ist es möglich, diese cyclische Alkane enthaltenden Fraktionen bis zu 95 Gew.-% in $C_2$-$C_4$ n-Alkane umzuwandeln. Hierbei wird die Bildung von Aromaten, die bei höheren Temperaturen auftritt, vermieden. Auch der Gehalt an Isoalkanen und Cycloalkanen ist sehr gering.

Als Katalysator für das erfindungsgemäße Verfahren wird ein Zeolithkatalysator eingesetzt. Dieser besitzt einen Geräumigkeitsindex SI ≤ 20 und einen modifizierten Zwangsindex CI*> 1. Diese Indexwerte sind gängige Parameter, mit denen die Zeolithe charakterisiert werden können. Diesbezüglich wird verwiesen auf J. Weitkamp, S. Ernst und R. Kumar, Appl. Catal. 27 (1986, 207-210) bzw. J.A. Martens, M. Tielen, P.A. Jacobs, J. Weitkamp, Zeolites 4 (1984, 98-107). Der Begriff "Zeolith" ist hier im weitesten Sinn als mikroporöses Material definiert. Er umfaßt insbesondere nicht nur Zeolithe mit der chemischen Zusammensetzung von Aluminosilicaten, sondern von jeder beliebigen chemischen Zusammensetzung, also z. B. auch Aluminophosphate ($AlPO_4$), Silicoaluminophosphate (SAPO), Gallosilicate usf. Während alle zeolithischen Materialien, deren Geräumigkeitsindex SI oder modifizierter Zwangsindex CI* in den o. g. Bereich fallen, Katalysatoren für das erfindungsgemäße Verfahren sind, zählt zu den bevorzugten Katalysatoren der Zeolith ZSM-5 in seiner H-Form. Dieser Katalysator wird beispielsweise beschrieben in der US 3,702,886.

Der Zeolithkatalysator in der erfindungsgemäßen Form kann unmittelbar in seiner H-Form, d. h. ohne daß er mit einem hydrierend wirkenden Metall modifiziert worden wäre, verwendet werden. Gleichermaßen beinhaltet die Erfindung Zeolithkatalysatoren, die mittels einer beliebigen Methode mit einem hydrieraktiven Metall beladen wurden. Wenn der Katalysator mit einem hydrierend wirkenden Metall modifiziert wurde, so bewegt sich der Metallgehalt zwischen 0,0001 und 5 Gew.-%, vorzugsweise zwischen 0,001 und 2 Gew.-%. Bevorzugt werden die Metalle ausgewählt aus der Gruppe Pd, Rh, Ru, Ir, Os, Cu, Co, Ni, Pt, Fe, Zn, Ga, In, Mo, W, V.

Ganz besonders bevorzugt ist ein Metallgehalt von 0,01 Gew.-%.

Weiterhin ist es bevorzugt, einen formselektiven Zeolithkatalysator einzusetzen. Dies bedeutet, daß der Katalysator so gewählt wird, daß die Zeolithporen und die Größe der Reaktandenmoleküle dieselbe Größenordnung besitzen. Dies führt zu einem höheren Anteil an n-Alkanen im Vergleich zu den etwas sperrigeren Isoalkanen im Produktgemisch. Außerdem wird die Bildung von Vorläufern für die Bildung von Aromaten und Koks, der zur Katalysatordesaktivierung führt, verhindert. Zeolithe mit Faujasit-Struktur, wie sie teilweise im Stand der Technik verwendet werden, desaktivieren dagegen sehr schnell und sind durch CI*≤ 1 und SI > 20 charakterisiert. In bevorzugter Weise wird der Katalysator in seiner H-Form verwendet. Im Gegensatz zu Katalysatoren des Standes der Technik verfügt der Katalysator damit über stark saure Zentren, die neben der Ringöffnung ein säurekatalysiertes Cracken oder Hydrocracken zu Produkten mit kleinerer Kohlenstoffanzahl als im Einsatzkohlenwasserstoff ermöglichen. Dadurch wird der Anteil der n-Alkane mit niedrigerer Kohlenstoffanzahl im Produkt stark erhöht.

Bei der Entwicklung des erfindungsgemäßen Verfahrens wurde festgestellt, daß bei Einsatz von Katalysatoren ohne Metallanteil bei höheren Temperaturen Aromaten gebildet werden. Die optimale Reaktionstemperatur dieser Katalysatoren liegt daher etwas niedriger als die der Katalysatoren mit entsprechendem geringen Metallgehalt.

Ein weiterer Gegenstand der Erfindung ist ein Katalysator gemäß Anspruch 14 zur Herstellung von n-Alkanen aus Mineralölfraktionen, die Cycloalkane und/oder Aromaten enthalten. Dieser Katalysator besteht aus einem Zeolith mit einem Geräumigkeitsindex von SI ≤ 20 und einem modifizierten Zwangsindex CI*> 1, wobei der Katalysator 0,0001 bis 0,01 Gew.-% eines Metalls ausgewählt aus der Gruppe Pd, Rh, Ru, Ir, Os, Cu, Co, Ni, Pt, Fe, In, Mo, W, V oder Gemische derselben enthält. Der Katalysator ist bevorzugt ein Zeolith des Strukturtyps MFI wie beispielsweise ZSM-5, beschrieben in der US 3,702,886. Der Katalysator liegt in seiner H-Form vor.

Der erfindungsgemäße Katalysator läßt sich von bisher bekannten Zeolithkatalysatoren dadurch abgrenzen, daß er nur sehr geringe Metallgehalte besitzt. Üblicherweise werden Katalysatoren in monofunktionelle und bifunktionelle Katalysatoren eingeteilt. Monofunktionelle Katalysatoren enthalten als katalytisch wirksame Komponente nur saure Zentren aber kein Metall. Bifunktionelle Katalysatoren sind dagegen dadurch gekennzeichnet, daß sie sowohl über saure Zentren als auch über eine hydrier-/dehydrieraktive Komponente, typischerweise 0,2 bis 2 Gew.-% an hydrieraktiven Edelmetallen verfügen.

Die erfindungsgemäßen Katalysatoren zeichnen sich im Gegensatz zu monofunktionellen und bifunktionellen Katalysatoren dadurch aus, daß sie diese hydrieraktiven Metalle nur in Spuren von 0,0001 bis 0,01 Gew.-% aufweisen. Die Eigenschaften der Katalysatoren werden daher im wesentlichen durch die sauren Zentren bestimmt, wobei der Metallgehalt aber ausreicht, um intermediär an den sauren Zentren gebildete aromatische Verbindungen oder Olefinverbindungen weitgehend zu hydrieren. Dadurch verringert sich auch die Katalysatordesaktivierung, was ein weiterer Vorteil beim Einsatz der erfindungsgemäßen Katalysatoren ist.

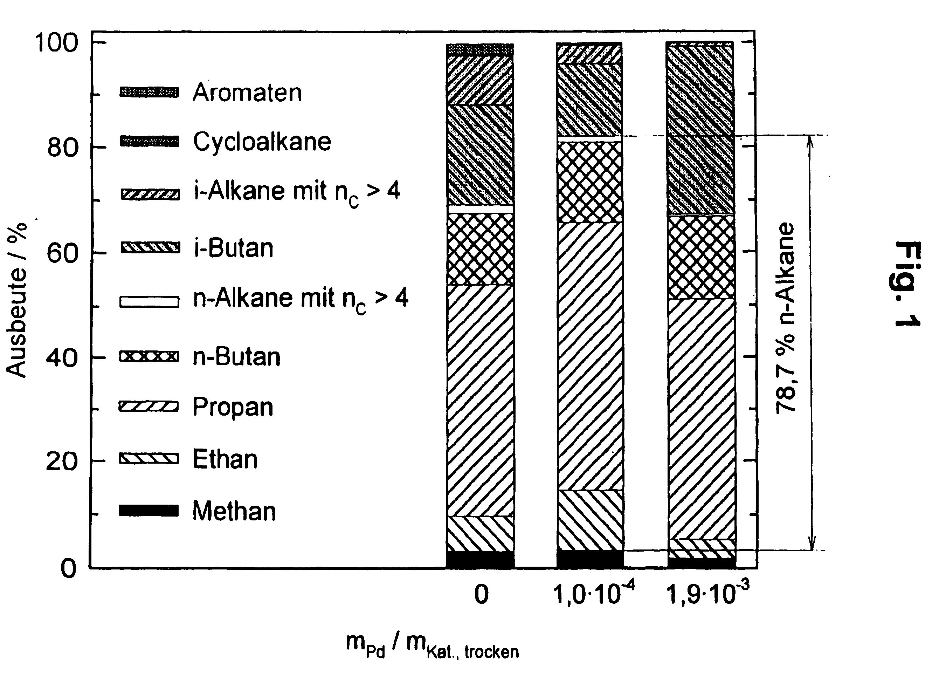

Figur 1 zeigt die Variationen der erhaltenen Produkte in Abhängigkeit vom Metallgehalt bei Pd/H-ZSM-5-Katalysatoren. Die Reaktion erfolgte bei 400 °C, wobei die Katalysatoren bei einer Temperatur von 300 °C aktiviert wurden. Die Belastung (WHSV) betrug 0,71 h$^{-1}$. Es wurde Methylcyclohexan umgesetzt. Aus den Ergebnissen ist ablesbar, daß der Katalysator ohne Palladium (linke Säule) als typischer monofunktioneller Katalysator zu einer Ausbeute an n-Alkanen, Ethan, Propan, n-Butan und n-Alkane mit $n_c$ > 4 von 66,0 % führt. Neben i-Alkanen und Methan werden jedoch auch Aromaten und Cycloalkane bei der Reaktion gebildet.

Der Katalysator der rechten Säule mit einem Metallanteil von 0,19 Gew.-% Palladium ist ein typischer bifunktioneller Katalysator. Hier entstehen bei der Reaktion keine Aromaten und Cycloalkane, jedoch größere Anteile an i-Alkanen. Die Ausbeute der n-Alkane beträgt 65,5 %.

Die mittlere Säule zeigt die Ergebnisse an einem Katalysator mit einem Metallgehalt von 0,01 Gew.-%. Bei der Reaktion werden quasi keine Aromaten und Cycloalkane gebildet, und die Ausbeute an n-Alkanen ist mit 78,7 % erheblich höher als die n-Alkan-Ausbeute bei den monofunktionellen bzw. bifunktionellen Katalysatoren.

Durch die gezielte Verkokung z.B. durch Methylcyclohexan, Toluol oder 2-Methyl-naphthalin ist es möglich, die Ausbeute an n-Alkanen bei dem Katalysator noch weiter zu erhöhen.

Die nachfolgende Tabelle 1 zeigt die Zusammensetzung des bei der Umsetzung von Methylcyclohexan an 0,01 Pd/H-ZSM-5 bei 400 °C und WHSV von 0,71 bzw. 1,66 h$^{-1}$ erhaltenen Gemisches in Gew.-%.

Aus der Tabelle ist zu entnehmen, daß bei der Umsetzung von Methylcyclohexan, zu über 70 Gew.-% n-Alkane wie Ethan, Propan und n-Butan entstehen.

Tabelle 1

| WHSV/h$^{-1}$ | 0,71 | 1,66 |
|---|---|---|
| Methan | 3,68 | 2,74 |
| Ethan | 11,38 | 10,87 |
| Propan | 51,19 | 50,30 |
| n-Butan | 15,03 | 14,23 |
| n-Pentan | 1,03 | 1,37 |
| n-Hexan | 0,03 | 0,04 |
| iso-Butan | 13,82 | 13,84 |
| iso-Pentan | 3,15 | 4,74 |
| iso-Hexane | 0,23 | 0,45 |
| iso-Heptane | 0,00 | 0,03 |
| Cyclopentan | 0,06 | 0,13 |
| $C_6$-Cycloalkane | 0,01 | 0,02 |
| $C_7$-Cycloalkane | 0,11 | 0,03 |
| $C_8$-Cycloalkane | 0,00 | 0,01 |

Tabelle fortgesetzt

| | | |
|---|---|---|
| Benzol | 0,01 | 0,07 |
| Toluol | 0,09 | 0,35 |
| $C_8$-Aromaten | 0,12 | 0,55 |
| $C_9$-Aromaten | 0,05 | 0,24 |

Gegenüber den bekannten bifunktionellen Katalysatoren ist die Herstellung des erfindungsgemäßen Katalysators erheblich kostengünstiger aufgrund des geringeren Edelmetallgehaltes.

Ein weiterer wichtiger Faktor für die Qualität des Katalysators ist die Formselektivität. Die nachfolgende Tabelle 2 zeigt die Ergebnisse der Umsetzung von Methylcyclohexan bei 400 °C und 6 MPa an edelmetallfreien Zeolithkatalysatoren unterschiedlicher Porengeometrie. Zeolith Y ist ein weitporiger Zeolith mit großem Porendurchmesser und großen Hohlräumen. An seiner H-Form können sperrige Isoalkane und Koks leicht gebildet werden. Das Verhältnis der Ausbeute von n-Alkanen zur Ausbeute von Isoalkanen ist an diesem Zeolithtyp relativ ungünstig ($Y_{n-Alk.}/Y_{i-Alk.}$ = 1,1). Es ist weiterhin eine starke Desaktivierung zu beobachten (Umsatz nach ½ Stunde Laufzeit 100 %, Umsatz nach 8 Stunden Laufzeit nur noch 75 %).

Tabelle 2 . Umsetzung von Methylcyclohexan an Zeolithen unterschiedlicher Porenabmessungen bei 400 °C und 6 MPa

| Zeolith | H-ZSM-22 | H-ZSM-5 | H-ZSM-12 | H-Y |
|---|---|---|---|---|
| Porensystem (Porendurchmesser/nm) | 1-d 10-R. (0,55 x 0,44) | 2-d 10-R. (0,56 x 0,53 bzw. 0,55 x 0,51) | 1-d 12-R. (0,59 x 0,55) | 3-d 12-R. (0,74) Superkäfig: d = 1,3 nm |
| $n_{Si}/n_{Al}$ | 39 | 19 | 58 | 2,5 |
| WHSV/$h^{-1}$ | 0,71 | 0.73 | 0,71 | 0,92 |
| $X_{½h}$[1]/% | 23,3 | 100 | 99,6 | 100 |
| $N_{8h}/X_{½h}$[2]/% | 100 | 100 | 99,7 | 74,7 |
| $Y_{methan}$[3]/ % | 0,9 | 4,3 | 1,1 | 0,5 |
| $Y_{n-Alk.}$[3,4]/ % | 15,9 | 70,7 | 53,9 | 47,3 |
| $Y_{iso-Alkane}$[3]/ % | 5,3 | 22,0 | 39,6 | 43,8 |
| $Y_{cycloalk.}$[3]/ % | 1,1 | 0,1 | 1,7 | 1,3 |
| $Y_{aromaten}$[3]/ % | 0,0 | 2,9 | 3,2 | 7,1 |
| $Y_{n-Bu}$[3]/$Y_{I-Bu}$[3] | 1,01 | 0,70 | 0,54 | 0,39 |
| $Y_{n-Alk.}$[3,4]/$Y_{I-Alk.}$[3] | 3,00 | 3.21 | 1,36 | 1,08 |
| $$\dfrac{\overline{Y_{Et}{}^3 + Y_{Pr}{}^3}}{Y_{C4+-Kw.}{}^3}$$ | 1,03 | 1,61 | 0,61 | 0,47 |

[1] Umsatz von Methylcyclohexan nach ½ h Laufzeit

[2] Verhältnis des Umsatzes nach 8 h Laufzeit zu dem Umsatz nach ½ h Laufzeit

[3] Ausbeute nach 30 min Laufzeit

[4] ohne Methan

Zeolith ZSM-22 ist ein mittelporiger Zeolith mit nur eindimensionalem Porensystem. An seiner H-Form wird daher ein hoher Anteil von n-Alkanen gebildet ($Y_{n-Al.k}/Y_{i-Alk.}$ = 3,0). Allerdings ist das Porensystem so eng, daß das Edukt Methylcyclohexan kaum Zugang findet, d.h. die Porendiffusion ist behindert. Aus diesem Grunde beträgt der Umsatz bei der Reaktion lediglich 23 %. Das dreidimensionale Porensystem des mittelporigen Zeoliths ZSM-5 liegt in idealer Weise zwischen den Porensystemen der Zeolithe ZSM-22 und Y. Methylcyclohexan kann leicht in den Zeolith hineindiffundieren, so daß ein Umsatz von 100 % beobachtet wird. Die Poren sind jedoch eng genug, so daß die Bildung von sperrigen Isoalkanen und von Koks stark benachteiligt ist, was sich darin äußert, daß der Umsatz im betrachteten Zeitraum von 8 Stunden Laufzeit konstant bei 100 % bleibt und das Verhältnis der Ausbeuten von n-Alkanen zu i-Alkanen 3,2 ist.

Der Zeolith ZSM-12 hat zwar etwas größere Porenöffnungen als der Zeolith ZSM-5, sie sind aber deutlich kleiner als die von Zeolith Y; zudem ist das Porensystem von ZSM-12 eindimensional und verfügt nicht über große Käfige, wie das von Zeolith Y, weshalb an H-ZSM-12 das Verhältnis der Ausbeute von n-Alkanen zur Ausbeute von Isoalkanen 1,4 ist, also wesentlich geringer ist als an ZSM-5. Trotzdem ist das Porensystem im Vergleich zu dem von Zeolith Y eng genug, um ein schnelles Absinken des Umsatzes durch Koksbildung im betrachteten Zeitraum zu verhindern.

Der Zeolith ZSM-5 dient nur als ein Beispiel für einen im Sinne der Erfindung idealen Zeolith. Je nach experimentellen Bedingungen kann jeder Zeolith, dessen Porensystem weniger Platz als das von Zeolith Y bietet, d.h. für den $SI \leq 20$ und $CI^* > 1$ ist, verwendet werden, sofern die Ausgangsstoffe zu dem Porensystem dieses Zeolithes noch Zugang finden.

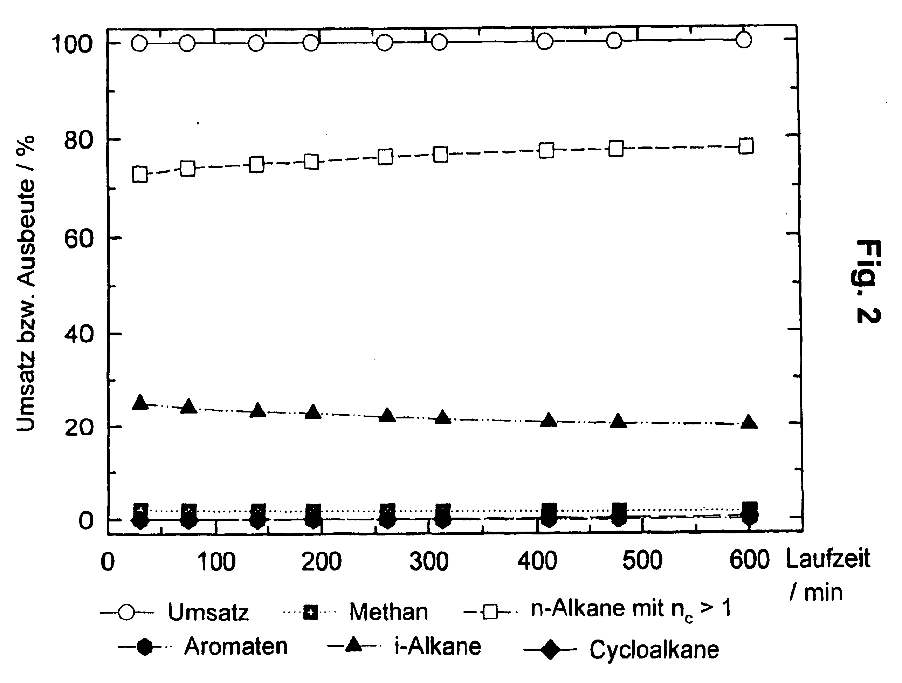

Wie vorstehend bereits erwähnt wurde, kann das erfindungsgemäße Verfahren auch in einer Stufe durchgeführt werden. Es erfolgt dann zunächst die Hydrierung des aromatenreichen Einsatzgemisches zu cyclischen Alkanen und danach die Umsetzung dieser Cycloalkane zu n-Alkanen am selben Katalysator. In diesem Verfahren ist es auch möglich, den erfindungsgemäßen Katalysator einzusetzen, wenn der Metallgehalt des Katalysators mindestens 0,01 Gew.-% beträgt. Bevorzugtes Metall ist Palladium. Die nachfolgende Figur 2 zeigt die Umsetzung von Toluol an H-ZSM-5 mit einem Palladiumgehalt von 0,19 Gew.-% bei 400 °C und einer Belastung (WHSV) von 1,59 h$^{-1}$. Aus der Figur ist ersichtlich, daß bei der Umsetzung von Toluol der Anteil der erhaltenen n-Alkane im Produktstrom nach einer Laufzeit von 30 Minuten bereits 72,9 Gew.-% beträgt. Es werden 24,9 Gew.-% i-Alkane und 2,3 Gew.-% Methan erhalten. Mit zunehmender Laufzeit erhöht sich der Anteil der n-Alkane ohne Methan aufgrund einer moderaten Verkokung des Katalysators. Dabei werden die Poren des Katalysators verengt. Der Anteil der n-Alkane steigt nach einer Laufzeit von 600 Minuten auf bis zu 77,9 Gew.-%, wobei die Anteile der i-Alkane und des Methans im Produktstrom auf 19,7 bzw. 1,8 Gew.-% verringert werden. Der Gehalt an Cycloalkanen und Aromaten beträgt zusammen 0,7 Gew.-%.

Die nachfolgende Tabelle 3 zeigt die Zusammensetzung des bei der Umsetzung von Toluol an 0,01 Pd/H-ZSM-5, der bei 300 °C aktiviert wurde, bzw. 0,19 Pd/H-ZSM-5, der bei 400 °C aktiviert wurde, bei einer Reaktionstemperatur von 400 ° und einer WHSV von 0,7 h$^{-1}$. Die Tabelle zeigt, daß bei etwas höheren Metallgehalten eine weitgehende Umsetzung des Toluols zu Ethan, Propan und n-Butan erfolgt, wobei der Aromatengehalt quasi 0 Gew.-% beträgt.

Tabelle 3

| Pd-Gehalt/Gew.-% | 0,01 | 0,19 |
|---|---|---|
| Methan | 0,38 | 2,99 |
| Ethan | 1,50 | 6,51 |
| Propan | 4,96 | 47,54 |
| n-Butan | 0,99 | 16,46 |
| n-Pentan | 0,05 | 0,32 |
| iso-Butan | 1,29 | 25,62 |
| iso-Pentan | 0,18 | 0,55 |
| iso-Hexane | 0,03 | 0,00 |
| Cycloalkane | 0,41 | 0,00 |
| Benzol | 11,39 | 0,00 |
| Toluol | 61,13 | 0,00 |
| $C_8$-Aromaten | 16,06 | 0,00 |
| $C_9$-Aromaten | 1,60 | 0,00 |
| $C_{10}$-Aromaten | 0,03 | 0,00 |

Da an leicht verkokten Katalysatoren höhere Ausbeuten an n-Alkanen ohne Methan bei gleichzeitig deutlich geringeren Ausbeuten an Methan erzielt werden können, schließt das erfindungsgemäße Verfahren sowohl für die Umsetzung von Aromaten als auch für die Umsetzung von Cycloalkanen die Verwendung von gezielt vorverkokten Katalysatoren z.B. durch Methylcyclohexan, Toluol oder 2-Methylnaphthalin ein.

Mit dem erfindungsgemäßen Verfahren werden aromatenreiche Ströme einer neuen Verwendung zugeführt. Nach Hydrierung und Ringöffnung der aromatenreichen Fraktionen verbleiben gesättigte Flüssiggase, die zur Erzeugung von Ethylen und Propylen hervorragend geeignet sind. Hierdurch wird ein zukünftig als Ottokraftstoff-Komponente ungeeigneter Stoff-Strom durch den Einsatz im Steamcracker aufgewertet, die Menge des üblichen Steamcrackereinsatzes reduziert und der Anfall an Pyrolyseschwerbenzin vermieden oder zumindest vermindert.

Als weiterer Vorteil des erfindungsgemäßen Verfahrens erweist es sich, daß die aromatenreichen Benzinfraktionen neuen wirtschaftlichen Verwendungen zugeführt werden können, indem sie als hochwertige Einsatzkomponenten für die Olefinerzeugung weiterverarbeitet werden.

**Patentansprüche**

1. Verfahren zur Herstellung von n-Alkanen aus aromatenreichen Mineralölfraktionen enthaltend 80 bis 95 Gew-% aromatische Verbindungen und 1 bis 20 Gew-% olefinische Verbindungen oder Pyrolyse(schwer)benzin, **gekennzeichnet durch** die folgenden Schritte:

   • die Mineralölfraktion wird mit einem Zeolithkatalysator mit einem Geräumigkeitsindex SI ≤ 20 und einem modifizierten Zwangsindex CI*> 1 umgesetzt,
   • der $H_2$-Druck beträgt 5 bis 200 bar,
   • die Temperatur beträgt 150 bis 550°C,
   • die Belastung (WHSV) beträgt 0,1 bis 20 $h^{-1}$,
   • die cyclischen Kohlenwasserstoffe werden zu n-Alkanen umgewandelt.

2. Verfahren nach Anspruch 1, **dadurch gekennzeichnet, daß** der Anteil der n-Alkane ohne Methan und ohne $H_2$ am Reaktionsprodukt 50 bis 95 Gew.-%, vorzugsweise 66 bis 90 Gew.-% beträgt, der Anteil an Cyclolkanen im Reaktionsprodukt ≤ 0,2 Gew.-% ist und sich der Gehalt an Aromaten im Vergleich zum Ausgangsprodukt nicht vergrößert.

3. Verfahren nach Anspruch 1 oder 2, **dadurch gekennzeichnet, daß** überwiegend n-Alkane, die ausgewählt sind aus der Gruppe Ethan, Propan, n-Butan, entstehen.

4. Verfahren nach den Ansprüchen 1 bis 3, **dadurch gekennzeichnet, daß** als Zeolithkatalysator ZSM-5 in seiner H-Form eingesetzt wird.

5. Verfahren nach den Ansprüchen 1 bis 4, **dadurch gekennzeichnet, daß** der $H_2$-Druck 40 bis 80, vorzugsweise 50 bis 70 bar beträgt.

6. Verfahren nach den Ansprüchen 1 bis 5, **dadurch gekennzeichnet, daß** die Reaktionstemperatur 300 bis 500 °C beträgt.

7. Verfahren nach den Ansprüchen 1 bis 6, **dadurch gekennzeichnet, daß** die Belastung (WHSV) 0,5 bis 3,0 $h^{-1}$, vorzugsweise 1,3 bis 1,9 $h^{-1}$ beträgt.

8. Verfahren nach den Ansprüchen 1 bis 7, **dadurch gekennzeichnet, daß** der Zeolithkatalysator 0,0001 bis 5 Gew.-% an hydrieraktivem Metall ausgewählt aus der Gruppe Pd, Rh, Ru, Ir, Os, Cu, Co, Ni, Pt, Fe, Zn, Ga, In, Mo, W, V oder Gemische derselben enthält.

9. Verfahren nach den Ansprüchen 1 bis 8, **dadurch gekennzeichnet, daß** der Zeolithkatalysator formselektiv ist und so gewählt wird, daß die Zeolithporen und der Reaktant dieselbe Größenordnung besitzen.

10. Verfahren nach Ansprüchen 1 bis 9, **dadurch gekennzeichnet, daß** die Mineralölfraktionen oder Fraktionen aus Konversionsanlagen in einem vorgeschalteten Reaktionsschritt hydriert werden.

11. Verfahren nach Anspruch 10, **dadurch gekennzeichnet, daß** die Hydrierung und die Herstellung der n-Alkane in einem Reaktor erfolgen, wobei dann die Katalysatorschüttung so erfolgt, daß zunächst ein handelsüblicher Hydrierkatalysator und danach der Zeolithkatalysator durchlaufen wird und wobei die Temperatur des Reaktors von 250 °C am Eingang auf 400 °C am Ausgang erhöht wird.

12. Verfahren nach Anspruch 10, **dadurch gekennzeichnet, daß** die Hydrierung und die Herstellung der n-Alkane mit demselben Katalysator auf Zeolithbasis erfolgt, der einen Geräumigkeitsindex SI ≤ 20 und einen modifizierten Zwangsindex CI*> 1 besitzt und einen Metallgehalt an hydrieraktivem Metall von mehr als 0,01 Gew.-% aufweist, wobei das hydrieraktive Metall ausgewählt ist aus der Gruppe Pd, Rh, Ru, Ir, Os, Cu, Co, Ni, Pt, Fe, Zn, Ga, In, Mo, W, V oder Gemische derselben.

**13.** Verfahren nach den Ansprüchen 1 bis 12, **dadurch gekennzeichnet, daß** die Reaktionswärme, die bei der Hydrierung entsteht, zur Aufheizung bei der n-Alkan-Herstellung verwendet wird.

**14.** Katalysator zur Herstellung von n-Alkanen aus Mineralölfraktionen und Fraktionen aus thermischen oder katalytischen Konversionsanlagen, die Cycloalkane und/oder Aromaten enthalten, umfassend einen Zeolith mit einem Geräumigkeitsindex SI ≤ 20 und einem modifizierten Zwangsindex CI*> 1, wobei der Katalysator in seiner H-Form vorliegt und 0,0001 bis 0,01 Gew.-% eines Metalls ausgewählt aus der Gruppe Pd, Rh, Ru, Ir, Os, Cu, Co, Ni, Pt, Fe, In, Mo, W, V oder Gemische derselben enthält und wobei der Katalysator über stark saure Zentren zum säurekatalysierten Cracken und Hydrocracken verfügt und wobei er zur Ausbeuteerhöhung der n-Alkane gezielt verkokt wird.

**15.** Katalysator nach Anspruch 14, **dadurch gekennzeichnet, daß** der Zeolith ein Zeolith des Strukturtyps MFI (ZSM-5) ist.

**16.** Verwendung eines Katalysators umfassend einen Zeolith mit einem Geräumigkeitsindex SI ≤ 20 und einem modifizierten Zwangsindex CI*> 1, wobei der Katalysator 0,0001 bis 0,1 Gew.-% eines Metalls ausgewählt aus der Gruppe Pd, Rh, Ru, Ir, Os, Cu, Co, Ni, Pt, Fe, Zn, Ga, In, Mo, W, V oder Gemische derselben enthält zur Herstellung von n-Alkanen aus aromatenreichen Mineralölfraktionen enthaltend 80 bis 95 Gew-% aromatische Verbindungen und 1 bis 20 Gew-% olefinische Verbindungen oder Pyrolyse(schwer)benzin,

**17.** Verwendung nach Anspruch 16, **dadurch gekennzeichnet, daß** der Zeolith ein Zeolith des Strukturtyps MFI (ZSM-5) ist.

**18.** Verwendung nach Anspruch 16 oder 17, **dadurch gekennzeichnet, daß** der Katalysator in seiner H-Form vorliegt.

**19.** Verwendung nach den Ansprüchen 16 bis 18, **dadurch gekennzeichnet, daß** er zur Ausbeuteerhöhung der n-Alkane gezielt verkokt wird.

**Claims**

**1.** A process for the production of n-alkanes from high-aromatics mineral oil fractions containing 80 to 95 wt.-% aromatic compounds and 1 to 20 wt.-% olefinic compounds or pyrolysis (heavy) gasoline, **characterized by** the following steps:

- reacting the mineral oil fraction with a zeolite catalyst having a spaciousness index SI ≤ 20 and a modified constraint index CI* > 1,
- the $H_2$ pressure being 5 to 200 bars,
- the temperature being 150 to 550°C,
- the load (weight hourly space velocity: WHSV) being 0.1 to 20 $h^{-1}$,
- converting the cyclic hydrocarbons into n-alkanes.

**2.** The process according to claim 1, **characterized in that** the percentage of n-alkanes in the reaction product, excluding methane and $H_2$, is 50 to 95 wt.-%, preferably 66 to 90 wt.-%, the percentage of cycloalkanes in the reaction product is ≤ 0.2 wt.-%, and the content of aromatics is not increased compared to the starting material.

**3.** The process according to claim 1 or 2, **characterized in that** n-alkanes selected from the group of ethane, propane, n-butane are predominantly formed.

**4.** The process according to claims 1 to 3, **characterized in that** ZSM-5 in its H form is employed as zeolite catalyst.

**5.** The process according to claims 1 to 4, **characterized in that** the $H_2$ pressure is 40 to 80, preferably 50 to 70 bars.

**6.** The process according to claims 1 to 5, **characterized in that** the reaction temperature is 300 to 500°C.

7. The process according to claims 1 to 6, **characterized in that** the load (WHSV) is 0.5 to 3.0 h$^{-1}$, preferably 1.3 to 1.9 h$^{-1}$.

8. The process according to claims 1 to 7, **characterized in that** the zeolite catalyst includes 0.0001 to 5 wt.-% of a hydrogenation-active metal selected from the group of Pd, Rh, Ru, Ir, Os, Cu, Co, Ni, Pt, Fe, Zn, Ga, In, Mo, W, V or mixtures thereof.

9. The process according to claims 1 to 8, **characterized in that** the zeolite catalyst is shape-selective and selected such that zeolite pores and reactant are of the same size range.

10. The process according to claims 1 to 9, **characterized in that** the mineral oil fractions or fractions from conversion plants are hydrogenated in an upstream reaction step.

11. The process according to claim 10, **characterized in that** hydrogenation and n-alkane production are effected in a reactor, the catalyst bed being such that initial passage is through a commercial hydrogenation catalyst, followed by passage through said zeolite catalyst, the temperature of the reactor being raised from 250°C at the inlet to 400°C at the outlet thereof.

12. The process according to claim 10, **characterized in that** hydrogenation and n-alkane production are effected using the same zeolite-based catalyst which has a spaciousness index SI ≤ 20 and a modified constraint index CI* > 1 and a metal content of hydrogenation-active metal of more than 0.01 wt.-%, said hydrogenation-active metal being selected from the group of Pd, Rh, Ru, Ir, Os, Cu, Co, Ni, Pt, Fe, Zn, Ga, In, Mo, W, V or mixtures thereof.

13. The process according to claims 1 to 12, **characterized in that** the heat of reaction generated during hydrogenation is used for heating in the n-alkane production.

14. A catalyst for the production of n-alkanes from mineral oil fractions and fractions from thermal or catalytic conversion plants, which fractions include cycloalkanes and/or aromatics, said catalyst comprising a zeolite having a spaciousness index SI ≤ 20 and a modified constraint index CI* > 1, said catalyst being present in its H form and including 0.0001 to 0.01 wt.-% of a metal selected from the group of Pd, Rh, Ru, Ir, Os, Cu, Co, Ni, Pt, Fe, In, Mo, W, V or mixtures thereof, and said catalyst having strongly acidic centers for acid-catalyzed cracking and hydrocracking and being subjected to specific coking so as to increase the yield of n-alkanes.

15. The catalyst according to claim 14, **characterized in that** the zeolite is an MFI type structure (ZSM-5) zeolite.

16. Use of a catalyst comprising a zeolite with a spaciousness index SI ≤ 20 and a modified constraint index CI* > 1, said catalyst including 0.0001 to 0.1 wt.-% of a metal selected from the group of Pd, Rh, Ru, Ir, Os, Cu, Co, Ni, Pt, Fe, Zn, Ga, In, Mo, W, V or mixtures thereof, in the production of n-alkanes from high-aromatics mineral oil fractions containing 80 to 95 wt.-% aromatic compounds and 1 to 20 wt.-% olefinic compounds or pyrolysis (heavy) gasoline.

17. The use according to claim 16, **characterized in that** the zeolite is an MFI type structure (ZSM-5) zeolite.

18. The use according to claim 16 or 17, **characterized in that** the catalyst is present in its H form.

19. The use according to claims 16 to 18, **characterized in that** the catalyst is subjected to specific coking in order to increase the yield of n-alkanes.

**Revendications**

1. Procédé de préparation de n-alcanes à partir de fractions d'huiles minérales riches en composés aromatiques, contenant de 80 à 95 % en poids de composés aromatiques et de 1 à 20 % en poids de composés oléfiniques ou d'essence de pyrolyse (lourde), **caractérisé par** les étapes suivantes :

   • la fraction d'huile minérale est convertie à l'aide d'un catalyseur à zéolite ayant un indice d'habitabilité SI =< 20 et un indice de contrainte modifié CI*> 1,
   • la pression de H$_2$ est de 5 à 200 bars,
   • la température est de 150 à 550°C,

• la charge (WHSV) est de 0,1 à 20 h$^{-1}$,

• les hydrocarbures cycliques sont convertis en n-alcanes.

2. Procédé selon la revendication 1, **caractérisé en ce que** la proportion des n-alcanes sans le méthane et sans H$_2$ dans le produit de réaction est de 50 à 95 % en poids, de préférence, de 66 à 90 % en poids, la proportion en cycloalcanes dans le produit de réaction est de =<0,2 % en poids et **en ce que** la teneur en composés aromatiques n'est pas augmentée par comparaison au produit de départ.

3. Procédé selon la revendication 1 ou 2, **caractérisé en ce qu'**il se forme, pour la majeure partie, des n-alcanes, qui sont sélectionnés parmi le groupe éthane, propane, n-butane.

4. Procédé selon l'une quelconque des revendications 1 à 3, **caractérisé en ce que** l'on utilise, en tant que catalyseur à zéolite, la zéolite ZSM-5 dans sa forme H.

5. Procédé selon l'une quelconque des revendications 1 à 4, **caractérisé en ce que** la pression de H$_2$ est de 40 à 80, de préférence, de 50 à 70 bars.

6. Procédé selon les revendications 1 à 5, **caractérisé en ce que** la température de réaction est de 300 à 500 °C.

7. Procédé selon l'une quelconque des revendications 1 à 6, **caractérisé en ce que** la charge (WHSV) est de 0, 5 à 3,0 h$^{-1}$, de préférence, de 1,3 à 1,9 h$^{-1}$.

8. Procédé selon les revendications 1 à 7, **caractérisé en ce que** le catalyseur à zéolite contient de 0,0001 à 5 % en poids de métal activé en hydrogénation, sélectionné parmi le groupe Pd, Rh, Ru, Ir, Os, Cu, Co, Ni, Pt, Fe, Zn, Ga, In, Mo, W, V ou des mélanges de ces derniers.

9. Procédé selon les revendications 1 à 8, **caractérisé en ce que** le catalyseur à zéolite est sélectif en terme de forme et est choisi de telle manière à ce que les pores de la zéolite et du réactif possèdent le même ordre de grandeur.

10. Procédé selon les revendications 1 à 9, **caractérisé en ce que** les fractions d'huiles minérales ou les fractions provenant d'installations de conversion sont hydrogénées dans une étape de réaction intercalée au préalable.

11. Procédé selon la revendication 10, **caractérisé en ce que** l'hydrogénation et la préparation des n-alcanes se font dans une réacteur, la masse en vrac de catalyseur étant faite de telle sorte qu'il y a traversée tout d'abord d'un catalyseur d'hydrogénation commercial et ensuite du catalyseur à zéolite et la température du réacteur, qui est de 250°C à l'entrée, étant augmentée à la valeur de 400 °C à la sortie.

12. Procédé selon la revendication 10, **caractérisé en ce que** l'hydrogénation et la préparation des n-alcanes se font à l'aide du même catalyseur à base de zéolite, qui possède un indice d'habitabilité SI =< 20 et un indice de contrainte modifié CI*> 1 et qui présente une teneur métallique en métal activé en hydrogénation de plus de 0,01 % en poids, le métal activé en hydrogénation étant sélectionné parmi le groupe Pd, Rh, Ru, Ir, Os, Cu, Co, Ni, Pt, Fe, Zn, Ga, In, Mo, W, V ou des mélanges de ces derniers.

13. Procédé selon les revendications 1 à 12, **caractérisé en ce que** la chaleur de réaction qui se dégage lors de l'hydrogénation est utilisée en vue du chauffage au cours de la préparation des n-alcanes.

14. Catalyseur en vue de la préparation de n-alcanes à partir de fractions d'huiles minérales ou de fractions provenant d'installations de conversion thermiques ou catalytiques, qui contiennent des cycloalcanes et/ou des composés aromatiques, comprenant une zéolite ayant un indice d'habitabilité SI =< 20 et un indice de contrainte modifié C1*> 1, le catalyseur se présentant sous la forme H et contenant de 0,0001 à 0,01 % en poids d'un métal sélectionné parmi le groupe Pd, Rh, Ru, Ir, Os, Cu, Co, Ni, Pt, Fe, In, Mo, W, V ou des mélanges de ces derniers et le catalyseur disposant de centres fortement acides en vue du craquage et de l'hydrocraquage catalysés aux acides et le catalyseur subissant, en vue de l'augmentation du rendement en n-alcanes, une cokéfaction ciblée.

15. Catalyseur selon la revendication 14, **caractérisé en ce que** la zéolite est une zéolite du type structurel MFI (ZSM-5).

16. Utilisation d'un catalyseur comprenant une zéolite ayant une indice d'habitabilité SI =< 20 et un indice de contrainte modifié CI*> 1, le catalyseur contenant de 0,0001 à 0,1 % en poids d'un métal sélectionné parmi le groupe Pd, Rh, Ru, Ir, Os, Cu, Co, Ni, Pt, Fe, Zn, Ga, In, Mo, W, V ou des mélanges de ces derniers, en vue de la préparation de n-alcanes à partir de fractions d'huiles minérales riches en composés aromatiques, contenant des 80 à 95 % en poids de composés aromatiques et 1 à 20 % en poids de composés oléfiniques ou d'essence de pyrolyse (lourde).

**17.** Utilisation selon la revendication 16, **caractérisée en ce que** la zéolite est une zéolite du type structurel MFI (ZSM-5).

**18.** Utilisation selon la revendication 16 ou 17,
**caractérisée en ce que** le catalyseur est présent sous sa forme H.

**19.** Utilisation selon les revendications 16 à 18, **caractérisée en ce qu'**il subit une cokéfaction ciblée en vue de l'augmentation du rendement en n-alcanes.

# Fig. 1

# Fig. 2